# EUROPÄISCHE PATENTANMELDUNG

(11) **EP 2 327 969 A1**
(43) Veröffentlichungstag der Anmeldung: **01.06.2011**
(21) Anmeldenummer: 09014416.3
(22) Anmeldetag: 18.11.2009
(51) Int. Cl.: G01J 1/08, G01J 1/04

(54) **Testbeleuchtungssystem und Verfahren zum Testen einer Qualität eines photovoltaischen Systems**

(71) Anmelder: SIEMENS AKTIENGESELLSCHAFT, 80333 München (DE)
(72) Erfinder: Muschaweck, Julius, 82131 Gauting (DE)

(57) **Zusammenfassung**

Die Erfindung betrifft ein Testbeleuchtungssystem (2) zum Testen einer Qualität eines photovoltaischen Systems (5). Das Testbeleuchtungssystem (2) umfasst eine künstliche Lichtquelle (27, 28), eine Primäroptik (1, 1', 1", 41) und eine Sekundäroptik (3) mit einem Mikrolinsenarray (19), die so ausgebildet und zueinander ausgerichtet sind, dass die Primäroptik (1, 1', 1") Licht (9) der Lichtquelle (27) innerhalb eines vordefinierten Einstrahlwinkelbereichs (α) kollimiert und damit eine Eintrittsseite des Mikrolinsenarrays (19) der Sekundäroptik (3) gleichmäßig beleuchtet und dass das aus einer Austrittsseite des Mikrolinsenarrays (19) austretende Licht (9') auf einer Beleuchtungsfläche innerhalb eines definierten Test-Akzeptanzwinkelbereichs liegt und eine gleichmäßige Winkelverteilung aufweist. Außerdem umfasst die Erfindung ein Verfahren zum Testen einer Qualität eines photovoltaischen Systems sowie eine Testeinrichtung (80) mit einem solchen Testbeleuchtungssystem (2).

## Beschreibung

Testbeleuchtungssystem und Verfahren zum Testen einer Qualität eines photovoltaischen Systems

Die vorliegende Erfindung betrifft ein Testbeleuchtungssystem zum Testen einer Qualität eines photovoltaischen Systems. Außerdem betrifft sie ein Verfahren zum Testen einer Qualität eines photovoltaischen Systems sowie eine Testeinrichtung mit einem solchen Testbeleuchtungssystem.

Die Bedeutung von Solarsystemen hat in den letzten Jahrzehnten enorm zugenommen. Sie bilden mittlerweile eine breit genutzte Ergänzung zu bekannten Energieumwandlungstechnologien. Neben den vielfach genutzten thermischen Solarkollektoren, die Lichteinstrahlung zur Gewinnung von Wärme nutzen, spielt dabei vor allem die Photovoltaik eine Rolle, also die direkte Umwandlung von Lichtleistung in elektrische Leistung.

Eine spezielle Ausformung innerhalb der Photovoltaik-Systeme sind die konzentrierenden Photovoltaik-Systeme. Dabei wird Sonnenlicht, das auf einer Apertur des Photovoltaik-Systems auftrifft mit Hilfe eines optisch konzentrierenden Systems, in der Regel einem konkaven Spiegel oder einem Linsensystem, analog zu einem Brennglas auf eine deutlich kleinere Fläche konzentriert, auf der eine Photozelle angeordnet ist. Eine solche Apertur ist beispielsweise quadratisch und weist eine Fläche von 300 x 300 mm auf; die Photozelle hingegen nur eine Fläche von 10 x 10 mm.

Mit konzentrierenden Systemen kann theoretisch eine Licht-Konzentration mit einem Faktor von bis zu 80000 erreicht werden. In derzeit gebräuchlichen konzentrierenden Photovoltaik-Systemem wird die Konzentration auf ca. 1000 begrenzt. Diese Grenze ist durch die Photozelle selbst bedingt, da sie bei einer noch höheren Konzentration durch die konzentrierte Sonneneinstrahlung so heiß würde, dass sie beschädigt würde.

Der Vorteil konzentrierender photovoltaischer Systeme besteht vor allem darin, dass die Photozelle selbst sehr klein gehalten werden kann, so dass die Verwendung sehr teurer Materialien wie dem Silizium der Photozellen deutlich eingeschränkt wird. Stattdessen dienen hinlänglich bekannte optische Konzentrierungssysteme aus weniger teuren Materialien wie Linsen und Spiegel der Konzentration, wodurch die punktuelle Anbringung von Photozellen möglich wird. Gleichzeitig steigt die Effizienz von Photozellen in der Regel mit der Konzentration der Strahlung an, so dass für gleiche Energieausbeute weniger Gesamtfläche nötig ist. Hierdurch werden konzentrierende Systeme insgesamt kostengünstiger bei gleichzeitig hoher Energieausbeute.

Die Anforderungen an die Qualitätskontrolle photovoltaischer Systeme steigen in dem Maße, in dem die Energieausbeute der Systeme von der Genauigkeit ihrer Abstimmung in sich und mit ihrer Außenwelt, insbesondere mit der Position der Sonne abhängt. Dies ist gerade bei der konzentrierenden Photovoltaik im Besonderen der Fall. Der ohnehin notwendigen Produktkontrolle kommt damit ein viel höherer Stellenwert zu, wobei es insbesondere darauf ankommt, die Systeme auf ihre äußeren Rahmenbedingungen abzustimmen. Diese Rahmenbedingungen sind im Wesentlichen durch einige charakteristische Eigenschaften des Sonnenlichts vorgegeben, unter anderem die folgenden:
Sonnenlicht ist telezentrisch ausgerichtet und seine Bestrahlungsstärke, d. h. die Leistung der Strahlung pro Fläche, ist homogen. Außerdem ist die Strahldichte des Sonnenlichts besonders hoch innerhalb eines Akzeptanz-Winkelbereichs eines konzentrierenden photovoltaischen Elements, der im Bereich von ca. +/- 0,5° bis ca. +/- 2° zur Haupteinstrahlrichtung der Sonne liegt.

Neben den relevanten Eigenschaften der Sonne sind auch die konstruktiven Rahmenbedingungen von Solarsystemen von hoher Relevanz. Derzeit werden beispielsweise bei konzentrierenden Systemen einzelne Solarzellen in Reihe geschaltet, so dass die Qualität der schlechtesten Solarzelle die Leistungsausbeute des Systems insgesamt limitiert. Jede Solarzelle arbeitet bei solchen Systemen zudem in mehreren Ebenen, in denen unterschiedliche spektrale Anteile des Sonnenlichts absorbiert und in elektrische Leistung umgewandelt werden. Diese sogenannten Gaps werden ebenfalls in Serie geschaltet, so dass im Resultat sogar die schlechteste Gap des gesamten photovoltaischen Systems die Ausbeute des Gesamtsystems limitiert.

Um die Qualität eines photovoltaischen Systems unter realitätsnahen Bedingungen effektiv messen zu können, ist es prinzipiell möglich, das System direkt der Sonneneinstrahlung auszusetzen und eine Testmessung der Leistung des Systems durchzuführen. Dabei besteht jedoch ein Problem darin, dass diesen Messungen keine valide Vergleichsbasis zugrunde liegt, so dass die Aussagekraft der Messergebnisse stark relativiert ist: Insbesondere aufgrund der Wetterverhältnisse, aber auch aufgrund unterschiedliche Sonneneinstrahlungswerte je nach Tageszeit ist es praktisch unmöglich, Messergebnisse aus unterschiedlichen Messungen zu unterschiedlichen Zeiten sinnvoll miteinander in Bezug zu setzen. Hinzu kommt, dass man bei der Messung auf die Zeiten beschränkt wäre, in denen überhaupt Tageslicht zu Verfügung steht. Sinnvoll wäre daher eine künstliche Simulation der Sonne, die beim Testen immer die gleichen Bedingungen bereitstellt, unter denen getestet wird.

Aufgabe der vorliegenden Erfindung ist es daher, eine Möglichkeit bereitzustellen, wie die Qualität photovoltaischer Systeme verlässlich und reproduzierbar auf Basis gleich bleibender (oder einstellbarer) Eingangsparameter ermittelt werden kann. Insbesondere zielt die Erfindung dabei vorzugsweise auf die Anwendung bei konzentrierenden photovoltaischen Systemen ab, deren Komplexität, wie oben angedeutet, deutlich höher ist als bei nicht konzentrierenden Systemen.

Die Aufgabe wird durch ein Testbeleuchtungssystem gemäß Anspruch 1 und ein Verfahren gemäß Anspruch 13 gelöst.

Entsprechend umfasst ein Testbeleuchtungssystem der eingangs genannten Art eine künstliche Lichtquelle, eine Primäroptik und eine Sekundäroptik mit einem Mikrolinsenarray, wobei die Lichtquelle, die Primär- und die Sekundäroptik so ausgebildet und zueinander ausgerichtet sind, dass die Primäroptik Licht der Lichtquelle innerhalb eines vordefinierten Einstrahlwinkelbereichs kollimiert und damit eine Eintrittsseite des Mikrolinsenarrays der Sekundäroptik gleichmäßig beleuchtet und dass das aus einer Austrittsseite des Mikrolinsenarrays austretende Licht auf einer Beleuchtungsfläche innerhalb eines definierten Test-Akzeptanzwinkelbereichs liegt und eine gleichmäßige Winkelverteilung aufweist.

Ein wesentliches Element des Testbeleuchtungssystems ist dabei das Mikrolinsenarray mit einer Anzahl von Mikrolinsen. Diese sind beispielsweise auf einem Trägersubstrat angeordnet, das für das Licht der Lichtquelle mindestens teilweise, bevorzugt möglichst vollständig, transparent ist. Mit Hilfe dieser Mikrolinsen kann das eintreffende künstliche Licht so beeinflusst werden, dass es eine gleichmäßige Winkelverteilung erhält. Das Mikrolinsenarray wird mit Licht innerhalb eines bestimmten Einstrahlwinkelbereichs bestrahlt, der vorzugsweise auch innerhalb des Test-Akzeptanzwinkels liegt. Es wird Licht also nur in einem solchen Einstrahlwinkelbereich auf das Mikrolinsenarray abgegeben, in dem das Mikrolinsenarray das Licht innerhalb des Test-Akzeptanzwinkelbereichs wieder abgeben kann. Licht aus anderen Einstrahlwinkelbereichen wird vor Auftreffen auf das Mikrolinsenarray mit geeigneten Mitteln herausgefiltert. Mit anderen Worten: Das Mikrolinsenarray wird auf seiner Eintrittsseite mit kollimiertem Licht gleichmäßig (d.h. mit homogener Bestrahlungsstärke) mit einem hinreichend kleinen Winkelbereich beleuchtet.

Die optischen Elemente sind zudem bevorzugt so ausgebildet und miteinander kombiniert, dass das Testbeleuchtungssystem telezentrisches Licht abgibt. Dieses telezentrische, über die gesamte vorgegebene Beleuchtungsfläche, beispielsweise die Fläche der Apertur eines photovoltaischen Systems homogenisierte Licht entspricht in den oben aufgeführten, für photovoltaische Systeme derzeit relevanten Parametern dann weitestgehend denen des Sonnenlichts.

Der definierte Test-Akzeptanzwinkelbereich entspricht bevorzugt im Wesentlichen dem Akzeptanzwinkelbereich des jeweiligen zu untersuchenden photovoltaischen Systems. Entsprechend ist das Testbeleuchtungssystem bevorzugt in Abhängigkeit von dem Akzeptanzwinkelbereich eines bestimmten photovoltaischen Systems ausgebildet.

Als photovoltaisches System werden dabei sowohl photovoltaische Gesamtsysteme definiert, also beispielsweise ein Kollektorpanel bestehend aus mehreren Einzelzellen, als auch die photovoltaischen Einzelzellen innerhalb eines größeren Systemzusammenhang. Unter der zu testenden Qualität werden insbesondere Faktoren wie die Effizienz, der Wirkungsgrad und die korrekte Ausrichtung des photovoltaischen Systems auf die Sonne bzw. der einzelnen Zellen des Systems zueinander verstanden sowie die Qualität der Abstimmung der Gaps einer photovoltaischen Zelle aufeinander.

Sonnen-Simulationslampen sind bekannt beispielsweise für das Prüfen thermischer Sonnenkollektoren zur Warmwasser-Erzeugung. Solche herkömmlichen Sonnen-Simulationslampen bestrahlen die Testfläche jedoch mit Licht aus einem weit grö-βeren Winkelbereich als z.B. +/- 2°. Für thermische Sonnenkollektoren spielt diese Winkelverteilung keine Rolle, denn diese sind bei weitem nicht so winkelselektiv wie konzentrierende Photovoltaiksysteme. Für das Prüfen von konzentrierenden Photovoltaiksystemen sind solche herkömmlichen Sonnen-Simulationslampen jedoch nicht brauchbar.

In dem erfindungsgemäßen Testbeleuchtungssystem werden also mehrere optische Elemente miteinander so kombiniert, dass vorteilhafterweise eine Art Sonnen-Simulationslampe entsteht, deren abgestrahltes Licht die oben aufgeführten Kriterien erfüllt, die bisher nur von Sonnenlicht erfüllt wurden.

Diese "Sonnen-Simulationslampe" wird zum Testen photovoltaischer Systeme verwendet. Das erfindungsgemäße Testbeleuchtungssystem kann daher als Teil einer erfindungsgemäßen Testeinrichtung eingesetzt werden, das weiterhin ein Positionierungssystem zur relativen Positionierung eines photovoltaischen Systems und/oder eines Testbeleuchtungssystems in einer definierten Position zueinander umfasst. Ein solches Positionierungssystem kann als einfache räumliche Anordnung eines Aufstellortes für ein zu testendes Photovoltaik-System relativ zur Position des Testbeleuchtungssystems realisiert sein; es kann jedoch auch ein Fördersystem umfassen, welches z. B. das zu testende Photovoltaik-Systeme in eine fest vorgegebenen Testposition relativ zum Testbeleuchtungssystem bringt und nach einem Test wieder weiter befördert oder welches das Testbeleuchtungssystem nacheinander zu den zu testenden Photovoltaik-Systemen verbringt.

Die Erfindung umfasst auch die Verwendung eines erfindungsgemäßen Testbeleuchtungssystems zum Testen eines photovoltaischen Systems, und zwar insbesondere eines konzentrierenden photovoltaischen Systems. Wie oben dargelegt, spielt bei konzentrierenden photovoltaischen Systemen die Präzision eine entscheidende Rolle, um ein effizientes und überhaupt funktionsfähiges System zu erzielen. Der Test eines solchen Systems mit dem erfindungsgemäßen Testbeleuchtungssystem macht es daher erstmals möglich, reproduzierbare Messergebnisse zur sehr genauen Einschätzung der Qualität - hier gleichzusetzen mit der Präzision - zu gewinnen.

Außerdem betrifft die Erfindung ein Verfahren der eingangs genannten Art, bei dem Licht von einer künstlichen Lichtquelle über eine Primäroptik innerhalb eines vordefinierten Einstrahlwinkelbereichs kollimiert wird und damit eine Eintrittsseite eines Mikrolinsenarrays einer Sekundäroptik örtlich gleichmäßig beleuchtet wird, so dass das aus einer Austrittsseite des Mikrolinsenarrays austretende Licht auf einer Beleuchtungsfläche des photovoltaischen Systems innerhalb eines definierten Test-Akzeptanzwinkelbereichs liegt und eine gleichmäßige Winkelverteilung aufweist.

Die im Verfahren beleuchtete Beleuchtungsfläche des photovoltaischen Systems ist bevorzugt mindestens die Gesamt-Einstrahlfläche des Systems, besonders bevorzugt genau die Gesamt-Einstrahlfläche. So kann eine Messung des photovoltaischen Systems über seine gesamte Apertur erfolgen, und es wird andererseits (im Fall der Bestrahlung genau der Gesamt-Einstrahlfläche) möglichst kein Licht für die Beleuchtung anderer Bereiche verschwendet.

Bevorzugt umfasst das erfindungsgemäße Verfahren weiterhin eine Leistungsmessung des photovoltaischen Systems und einen Abgleich der ermittelten Leistung mit einem Referenz-Leistungswert. Dadurch kann ermittelt werden, ob das getestete photovoltaische System dem gewünschten Qualitäts-Standard, repräsentiert durch den Referenz-Leistungswert, beispielsweise einen Mindest-Soll-Leistungswert, entspricht oder vermutlich einen Fehler aufweist.

Weitere besonders vorteilhafte Ausgestaltungen und Weiterbildungen der Erfindung ergeben sich insbesondere aus den abhängigen Ansprüchen sowie der nachfolgenden Beschreibung. Dabei kann das Testverfahren auch entsprechend den abhängigen Ansprüchen zum analogen Testbeleuchtungssystem weitergebildet sein und umgekehrt.

Gemäß einer bevorzugten Ausführungsform weist das Mikrolinsenarray des erfindungsgemäßen Testbeleuchtungssystems eine Anzahl von doppelseitigen Mikrolinsen auf. Besonders bevorzugt sind diese Mikrolinsen doppelt konvex. Weiterhin hat es sich als besonders vorteilhaft erwiesen symmetrische Mikrolinsen zu verwenden. Es kann also zum Beispiel ein durchsichtiges Substrat, etwa eine Glas- oder Kunststoffplatte, mit beidseitig gleichartigen Linsenstrukturierungen verwendet werden, wobei die Linsen auf er einen Seite des Substrats genau gegenüber den Linsen auf der anderen Seite des Substrats liegen und sich die Mikrolinsen weiterhin in Form und vorzugsweise auch Material entsprechen. Die Mikrolinsenstrukturen können auf das Substrat aufgebracht, zum Beispiel verklebt, werden, jedoch auch einstückig mit dem Substrat, beispielsweise als Prägung des Substrats, realisiert sein. Damit kann ein heute bereits in guten Qualitäten als Standardmaterial lieferbares Mikrolinsenarray verwendet werden, ohne dass es dabei zu Qualitätseinbußen bei den Messergebnissen käme.

Das künstliche Licht wird, wie oben erwähnt, bevorzugt als telezentrisches Licht abgegeben. Bevorzugt umfasst die Primäroptik und/oder die Sekundäroptik eine Fresnel-Linse, die geeignet ausgebildet ist, um das auf sie gerichtete Licht telezentrisch zu kollimieren. Hierdurch kann Licht von handelsüblich erhältlichen künstlichen Lichtquellen verwendet werden, das dann durch die Fresnel-Linse geeignet ausgerichtet wird.

Vorzugsweise ist die Fresnel-Linse Teil der Sekundäroptik, wobei sie gemäß einer ersten Variante als eigenständiges, d. h. vom Mikrolinsenarray unabhängiges Funktionselement ausgebildet ist. Dies bedeutet, dass sowohl eine (preisgünstig und einfach erhältliche) Standard-Fresnel-Linse als auch ein (ebenfalls preisgünstiges und einfach erhältliches) Standard-Mikrolinsenarray verwendet werden kann.

Eine zweite, alternative Variante sieht vor, dass das Mikrolinsenarray auf seiner Eintrittsseite oder seiner Austrittsseite eine Fresnel-Linsenstruktur aufweist. Hierdurch entsteht auf einem Substrat eine Kombination unterschiedlicher Linsen, sodass das Mikrolinsenarray auch gleichzeitig unterschiedliche Funktionen bei der Wandlung des eintreffenden künstlichen Lichts erfüllen kann: Die herkömmlichen Mikrolinsen auf der einen Seite - bevorzugt auf der Eintrittsseite des Mikrolinsenarrays - sind bevorzugt konvex und als runde Linsen ausgebildet. Sie stellen sicher, dass die Winkelabdeckung des abgestrahlten Lichts gleichmäßig ist. Die Fresnel-Linsenstruktur - bevorzugt auf der Austrittsseite des Mikrolinsenarrays - kollimiert das Licht wiederum telezentrisch.

Zwar ist die Herstellung eines derartigen kombinierten Mikrolinsenarrays derzeit mit hohem Abstimmungs-, Arbeits- und damit Kostenaufwand verbunden, doch wird damit auch eine besonders effektive und raumsparende Ausführung eines solchen Arrays realisiert, dessen Präzision zudem noch höher ist als bei der Kombination zweier voneinander unabhängiger Linsensysteme, die miteinander erst kombiniert, d.h. geeignet zueinander ausgerichtet werden müssten.

Das Mikrolinsenarray ist bevorzugt so ausgebildet, dass es hexagonal angeordnete Einzel-Linsen umfasst und/oder Einzel-Linsen, deren Zwischenräume lichtundurchlässig ausgeführt sind. Durch die hexagonale Anordnung wird bei runden Linsenformen eine besonders hohe Linsendichte erreicht; die lichtundurchlässigen Zwischenräume dienen dem gezielten Ausblenden der Bereiche des Mikrolinsenarrays, in denen keine Mikrolinse vorhanden ist. Damit kann erreicht werden, dass alles Licht, das das Mikrolinsenarray durchdringt, die gewünschte Charakteristik aufweist und kein unerwünschtes Streulicht enthält.

Da die Akzeptanzwinkel photovoltaischer Systeme unter Umständen deutlich voneinander variieren können, sieht die Erfindung insbesondere vor, eine Testbeleuchtung für unterschiedliche Akzeptanzwinkelbereiche bereitzustellen. Dies wird vorteilhafterweise dadurch erreicht, dass das Testbeleuchtungssystem ein Set von austauschbaren Mikrolinsenarrays umfasst, die unterschiedliche Test-Akzeptanzwinkelbereiche aufweisen. Durch Austausch und geeignete Auswahl eines zu verwendenden Mikrolinsenarray kann daher der Test-Akzeptanzwinkelbereich genau auf die Bedürfnisse eines zu testenden photovoltaischen Systems eingestellt werden. Dies kann ohne größeren Aufwand, beispielsweise durch Demontage der Testeinrichtung , die das Testbeleuchtungssystem umfasst, erfolgen. Beispielsweise kann es durch einfaches Herausziehen eines derzeit im Testbeleuchtungssystem vorhandenen Mikrolinsenarrays und Einschieben eines für den bestimmten Testzweck spezifisch ausgewählten anderen Mikrolinsenarrays erfolgen, analog etwa zum Einschub einer Fotoplatte bei frühen Fotokameras oder einer auswechselbaren Testlinse bei Augentest durch einen Augenoptiker. Zu beachten ist, dass auch die dem Mikrolinsenarray vorgeschalteten optischen Elemente, speziell die Primäroptik so ausgebildet sein müssen, dass sie Licht in einem dem jeweiligen Mikrolinsenarray angepassten Einstrahlwinkelbereich liefern. Sie müssen entsprechend so ausgebildet sein, dass sie für alle gewünschten Test-Akzeptanzwinkel ausreichend kleine vordefinierte Einstrahlwinkel gewährleisten. Auch die dem Mikrolinsenarray vorgeschalteten optischen Elemente sind daher bevorzugt umstellbar in Abhängigkeit vom gewünschten Einstrahlwinkel.

Grundsätzlich es möglich, aus einer Vielzahl von künstlichen Lichtquellen die für den Einsatzzweck geeignete auszuwählen. Es hat sich erwiesen, dass eine künstliche Lichtquelle, die eine Xenon-Hochdrucklampe umfasst, besonders gut verwendet werden kann, da ihr Emissionsspektrum in etwa dem der Sonne entspricht und sie bei Anregung schnell hohe Energieimpulse liefern kann. Beispielsweise kann sie durch kurzzeitige, blitzartige Beleuchtung bereits genügend Energie im geeigneten Strahlenspektrum bereitstellen, um eine reproduzierbare Testung eines photovoltaischen Systems durchführen zu können. Durch die sehr kurze Beleuchtungszeit kann die Energie optimal eingesetzt werden und im Vergleich zu einer längeren oder gar dauerhaften Beleuchtung eine bedeutende Energieeinsparung realisiert werden.

Alternativ zur Verwendung einer Xenon-Lampe kann vorgesehen sein, dass die künstliche Lichtquelle eine LED, bevorzugt eine Mehrzahl von LEDs umfasst. Diese LED können in dem von ihnen emittierten Spektralbereich so ausgebildet sein, dass die Wellenlänge der jeweiligen Strahlung, darauf abgestimmt ist, dass jede der Gaps des zu testenden photovoltaischen Systems in etwa mit der gleichen Strahlungsenergie in der für sie relevanten Wellenlänge erhält. Auf diese Weise wird zwar das Spektrum des Sonnenlichts nur unvollständig simuliert, aber der Effekt ist ein vergleichbarer wie etwa bei Verwendung einer Xenon-Hochdrucklampe. Die Primär-Optik kann in diesem Falle -wie auch in Ausführungen mit anderen Lichtquellen - einen innen hohlen und an seinen Innenseiten verspiegelten abgeschnittenen Kegel- oder Pyramidenstumpf umfassen, der die emittierte Strahlung so kollimiert, dass er in einem bestimmten Winkelbereich austritt.

Eine vorteilhafte Ausführungsform der Primäroptik besteht darin, dass sie eine Blende, bevorzugt eine Lochblende umfasst. Hierdurch kann der Einstrahlwinkelbereich des auf das Mikrolinsenarray treffenden Lichts festgelegt werden. Die Verwendung einer Blende stellt damit ein sehr einfaches Mittel der kontrollierten Einstrahlwinkel-Einstellung dar.

Um das Licht einer Lichtquelle wie einer Lampe gut auszunutzen wird das Licht vorzugsweise von einer rundum abstrahlenden künstlichen Lichtquelle durch einen Reflektor so gerichtet, dass auch das Licht in die gewünschte Abstrahlrichtung gebracht wird, das eigentlich in die Gegenrichtung abgestrahlt würde. Dies erhöht die nutzbare Lichtausbeute der Lichtquelle. Durch die Wechselwirkung zwischen der Lichtquelle und dem Reflektor entsteht aber eine Art "toter Winkel" genau in dem Bereich, in dem Strahlen vom Reflektor durch die Lichtquelle absorbiert werden. Daher umfasst die Primäroptik bei einem bevorzugten Ausführungsbeispiel ein Axikon. Ein Axikon bündelt das vom Reflektor und der Lichtquelle selbst eingestrahlte Licht und verteilt es so weiter, dass Licht auch im Winkelbereich des "toten Winkels" vorliegt.

Alternativ oder ergänzend kann vorgesehen sein, dass die Primäroptik einen länglichen, im Querschnitt bevorzugt mehreckigen, beispielsweise dreieckigen, viereckigen oder sechseckigen Lichtleiter umfasst. Die Verwendung von mehreckigen Formen, die die Ebene parkettieren, sorgt für eine gleichmäßige Verteilung der durch Mehrfachreflektionen erzeugten virtuellen Bilder und somit für gute Homogenisierung der Strahlung. Wegen der typischen viereckigen Formgebung von Solarzellen ist er bevorzugt auch viereckig ausgeführt. Ein solcher Lichtleiter kann zum Beispiel eine Kombination aus Blende und Axikon ersetzen, da durch ihn ebenfalls eine Fokussierung und eine umfassende Strahlungsverteilung erzielt werden kann. Eine weitere alternativ oder ergänzend verwendbare Ausführungsform im Rahmen der Gestaltung der Primäroptik sieht vor, dass diese eine Kombination von Freiformspiegeln umfasst, ebenfalls mit dem Effekt der geeigneten Fokussierung und Strahlungsverteilung sowie zugleich der telezentrischen Kollimation. In diesem Falle fällt also die Notwendigkeit etwa einer Fresnel-Linse zur Telezentrierung weg.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
- Figur 1: ein Diagramm der Strahlstärke der Sonne in Abhängigkeit vom Einstrahlungswinkel,
- Figur 2: eine schematische Schnittansicht einer ersten Ausführungsform eines erfindungsgemäßen Testbeleuchtungssystems,
- Figur 3: eine schematische vergrößerte Schnittansicht der Primäroptik des Testbeleuchtungssystems gemäß Figur 2,
- Figur 4: eine Schnittansicht des Mikrolinsenarrays des Testbeleuchtungssystems in Figur 2, unter schematischer Darstellung des Ein- und Austritts von Strahlung,
- Figur 5: eine Draufsicht auf das Mikrolinsenarray in Figur 4,
- Figur 6: eine schematische stark vergrößerte Schnittansicht einer einzelnen Mikrolinse des Mikrolinsenarrays aus den Figuren 4 und 5,
- Figur 7: eine schematische Schnittansicht der Primäroptik und von Teilen der Sekundäroptik eines Testbeleuch-tungssystems gemäß einer zweiten Ausführungsform,
- Figur 8: eine schematische Schnittansicht der Primäroptik eines Testbeleuchtungssystems gemäß einer dritten Ausführungsform,
- Figur 9: eine schematische Schnittansicht der Primäroptik und von Teilen der Sekundäroptik eines Testbeleuch-tungssystems,
- Figur 10: eine Schnittansicht eines Mikrolinsenarrays gemäß einer Ausführungsform alternativ zu der in Figur 4, unter schematischer Darstellung des Ein- und Aus-tritts von Strahlung,
- Figur 11: eine schematische Darstellung einer erfindungsgemä-βen Testeinrichtung.

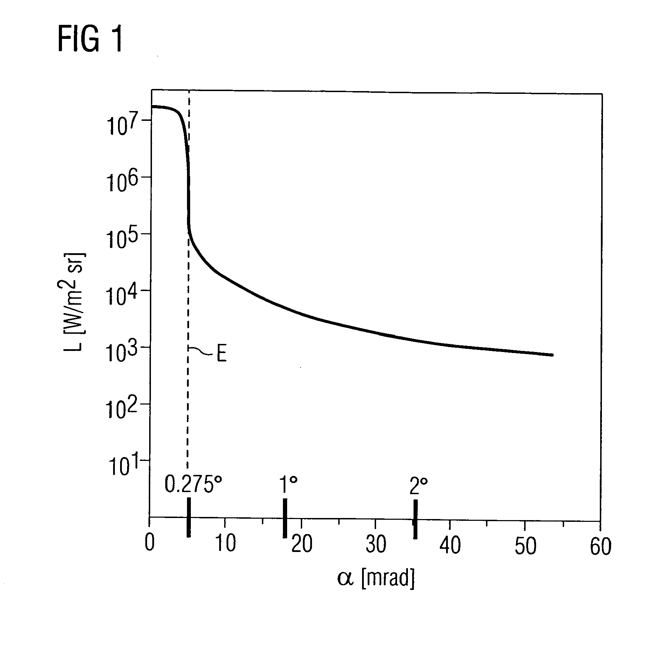

In Figur 1 ist in einem Diagramm die Strahldichte L der Sonne in Watt pro Quadratmeter pro Steradiant in Abhängigkeit vom Halbwinkel α (in Grad bzw. mrad) aufgetragen, in dem die Sonne in ein konzentrierendes photovoltaisches Element eingetragen wird. Der Rand der Sonne E liegt in etwa bei 4,8 mrad, d. h. bei 0,275 Grad. Es ist erkennbar, dass die Energieausbeute pro Fläche in Abhängigkeit vom Einstrahlwinkel rapide absinkt. Bei einem Einstrahlwinkel von 2° ist sie bereits um das 10.000fache geringer als bei genau 0°. Der Wirkungsgrad darunter ist schlicht zu gering, um ein effektives photovoltaisches System realisieren zu können. Es wird daher darauf abgezielt, derartige photovoltaische Systeme so auszubilden, dass sie nach entsprechend präziser Ausrichtung auf die Sonne innerhalb eines Akzeptanzwinkels von beispielsweise +/- 2° einen gleichmäßig hohen Wirkungsgrad aufweisen, und so möglichst viel von der Sonnenenergie in elektrische Energie umsetzen, auch wenn die Sonne aufgrund von Montage- und Nachführungstoleranzen nicht genau in der Mitte des Akzeptanzwinkelbereichs liegt. Ob z.B. ein einzelnes Solarmodul diese Vorgaben tatsächlich erreicht, gilt es mit Hilfe einer geeigneten Testeinrichtung bzw. eines geeigneten Testverfahrens zu prüfen. Hierzu dient die erfindungsgemäße Testeinrichtung bzw. das Testbeleuchtungssystem.

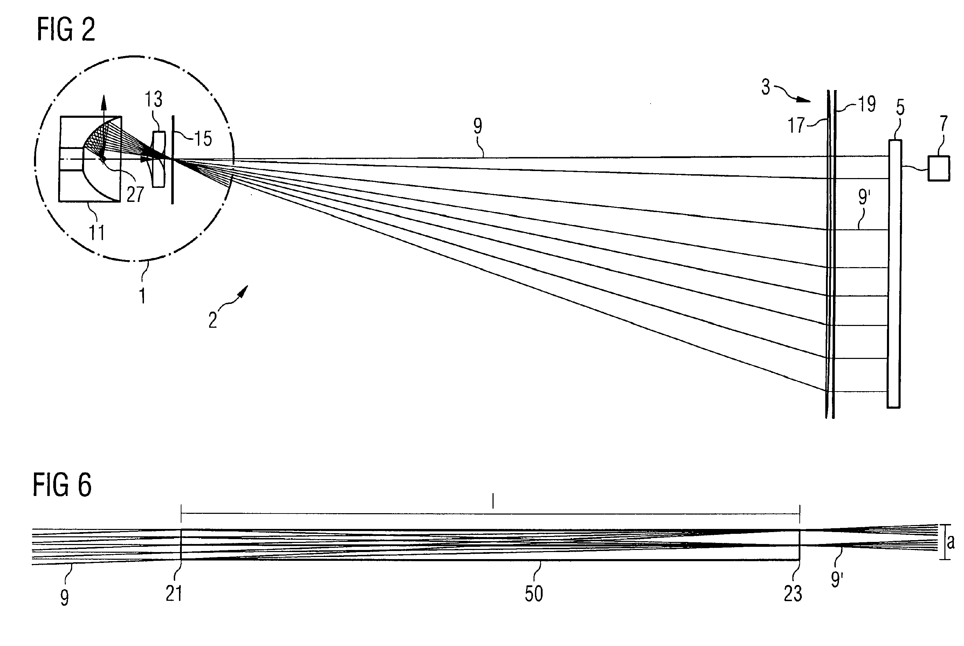

Figur 2 zeigt schematisch den Komplettaufbau einer Ausführungsform eines erfindungsgemäßen Testbeleuchtungssystems 2 mit einem zu testenden photovoltaischen System 5, nämlich einem (schematisch angedeuteten) konzentrierenden Solarmodul bestehend aus einer oder mehreren photovoltaischen Solarzellen und einer das einfallende Licht auf die Solarzelle(n) konzentrierenden Optik.

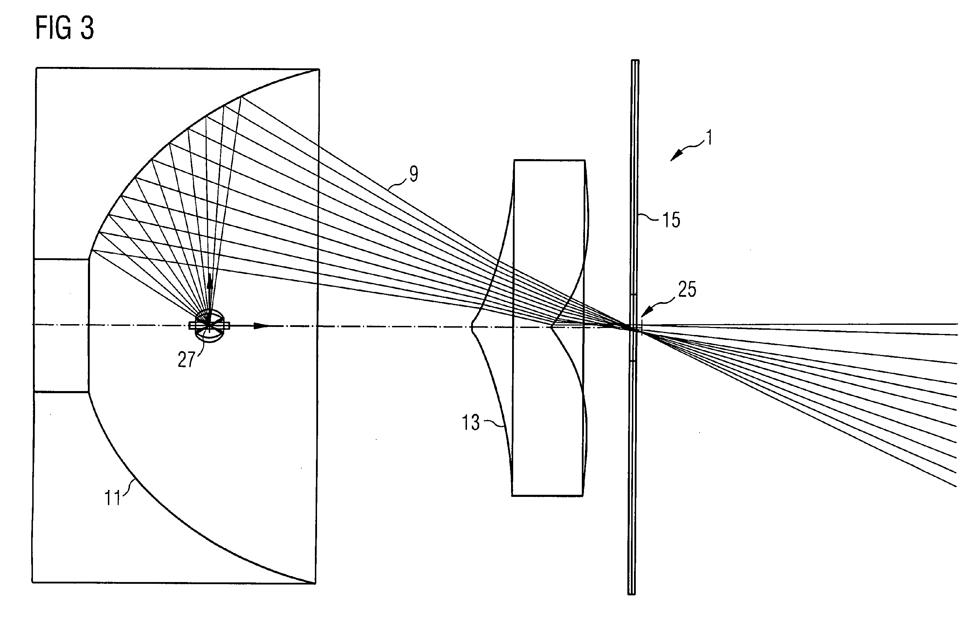

Das Testbeleuchtungssystem 2 umfasst eine künstliche Lichtquelle 27, die hier als Xenon-Hochdrucklampe realisiert ist, eine Primäroptik 1 und eine Sekundäroptik 3, die im Folgenden anhand der Figuren 3 bis 6 näher beschrieben werden.

Die Primäroptik 1, die in Figur 3 detailliert dargestellt ist, umfasst einen konkaven Reflektor 11, ein Axikon 13 und eine Blende 15, die hier als Lochblende realisiert ist.

Von der Xenon-Hochdrucklampe 27 aus wird künstliches Licht 9 über den Reflektor 11 gebündelt in Richtung des Axikons 13 abgegeben, um Verluste von Strahlung, die in Richtung des Reflektors 11 abgegeben wird, zu vermeiden. Das Axikon 13 ist so beschaffen, dass es Licht 9 auch dorthin verteilt, wo aufgrund der Positionierung der Lichtquelle 27 und des Reflektors 11 zwangsläufig ein "toter Winkel" entsteht. Das Licht 9 wird nun durch das Loch 25 der Lochblende 15 abgestrahlt. Hierdurch wird gezielt nur solches Licht 9 durchgelassen, das in einem bestimmten, durch die Größe des Lochs 25 der Lochblende 15 vordefinierten Winkelbereich liegt. Von der Primäroptik 1 wird das Licht 9 weiter auf die Sekundäroptik 3 geleitet. Von der Primäroptik 1 gelangt daher räumlich homogen verteiltes Licht in einem definierten Winkelbereich in Richtung der Sekundäroptik 3.

Die Sekundäroptik 3 (vgl. Figur 2) umfasst zur weiteren Umverteilung des Lichts 9 zunächst eine Fresnel-Linsenstruktur 17, die das Licht 9 telezentrisch kollimiert, sowie ein dahinter angeordnetes Mikrolinsenarray 19.

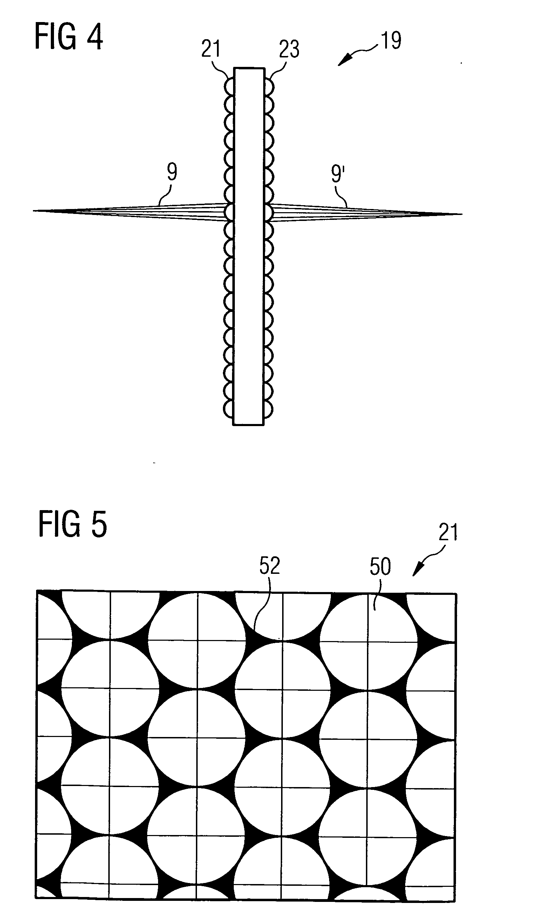

Das Mikrolinsenarray 19, das in den Figuren 4 und 5 detaillierter dargestellt ist, weist an seiner Vorder- und Rückseite konvexe Eintritts- und Austrittsseiten 21, 23 auf, die einander zugeordnet sind und gemeinsam jeweils eine Mikrolinse 50 bilden. Die Zwischenräume 52 zwischen den Mikrolinsen 50 sind lichtundurchlässig ausgebildet, um Licht 9, das auf diese Zwischenräume 52 trifft, nicht durchzulassen und somit sogenannte Geisterbilder zu vermeiden. Anders gesprochen, wird nur solches Licht 9 durch das Mikrolinsenarray 19 gelassen, das eine der Mikrolinsen durchläuft.

Der Effekt des Mikrolinsenarrays 19 wird anhand von Figur 6 verdeutlicht, die den Durchgang von Strahlung 9 durch eine einzelne Mikrolinse 50 zeigt: Eine solche Mikrolinse 50 lässt eintreffende Strahlung 9 von seiner Eintrittsseite 21 über seine Austrittsseite 23 so passieren, dass es in einer gleichmäßigen Winkelverteilung wieder austritt. Durch die Mikrolinse 50 wird erreicht, dass Licht des gleichen Eintrittswinkels auf einen gemeinsamen Austrittspunkt der Austrittsseite 23 der Mikrolinse 50 fokussiert und von dort aus gleichmäßig verteilt wieder abgestrahlt wird. Dies erfolgt mit dem Licht eines jeden Winkels, so dass die austretende Lichtstrahlung 9' innerhalb eines Test-Akzeptanzwinkelbereich des Mikrolinsenarrays sowohl räumlich als auch bezüglich der Winkelverteilung homogen ist. Dieser Effekt tritt in einem bestimmten Einfalls-Winkelbereich auf, in dem das Licht eingangsseitig auf das Mikrolinsenarray auftreten muss. Dass das auf das Mikrolinsenarray auftretende Licht 9 nur innerhalb dieses zulässigen Einfalls-Winkelbereichs liegt, wird durch die Primäroptik erreicht, hier durch entsprechende Anordnung der Lochblende 15 und Größe des Lochs 25 (vgl. Figur 3).

Durch die Wahl der Form der Mikrolinse, lässt sich der Test-Akzeptanzwinkelbereich vorgeben. Bei dem vorliegenden Ausführungsbeispiel mit Mikrolinsen 50 mit einem Brechungsindex n von 1,5, einem Linsen-Krümmungsradius r von jeweils 2,7 mm, einer Linsendicke 1 von 8 mm und einem Linsendurchmesser a von 0,37 mm wird beispielsweise ein Akzeptanzwinkelbereich von +/- 2° vorgegeben. Würde man alle anderen Parameter beibehalten und nur den Linsendurchmesser a halbieren, so läge der Akzeptanzwinkelbereich z.B. bei der Hälfte.

Mit dem aus der Sekundäroptik 3 austretenden Licht 9' wird dann das photovoltaische System 5 bestrahlt. Eine Leistungsmessungseinheit 7 ermittelt daraufhin die durch die Lichteinstrahlung erzeugte elektrische Leistung. Dieses Messergebnis kann in der Folge mit anderen Referenzergebnissen abgeglichen werden, so dass die Qualität des getesteten photovoltaischen Systems 5 ermittelbar ist. Bei diesem einfachen Testverfahren kann davon ausgegangen werden, dass die gemessene Leistung bei gleicher Qualität von unterschiedlichen gemessenen photovoltaischen Systemen gleicher Bauart innerhalb eines gewissen Toleranzbereichs immer gleich bleiben muss, da ja die eintreffende Lichteinstrahlung durch das Testbeleuchtungssystem genormt gleich bleibt.

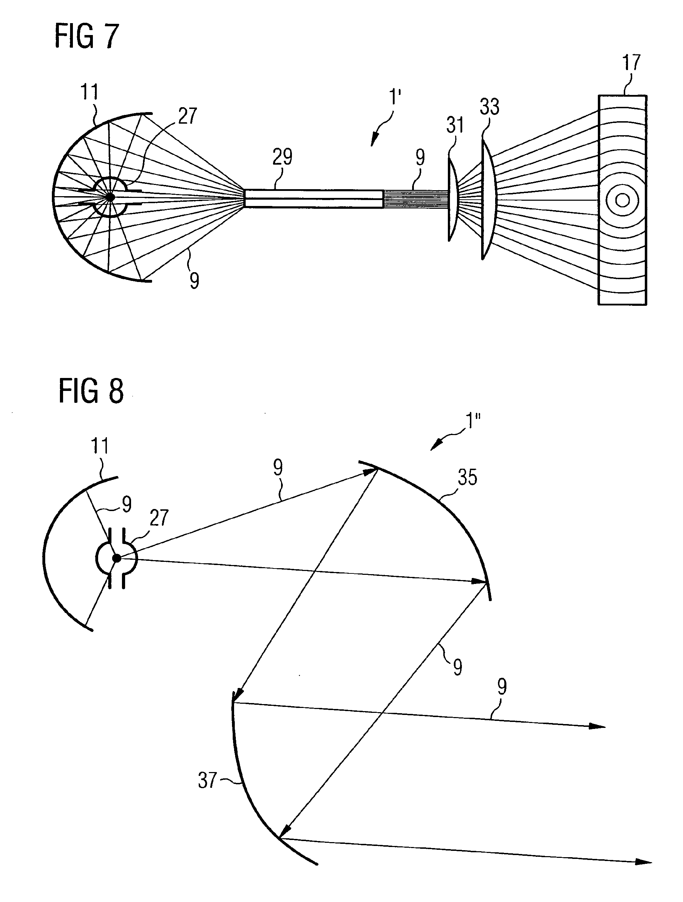

Figur 7 zeigt eine zweite Ausführungsform einer Primäroptik 1', bestehend aus einem im Querschnitt eckigen - hier viereckigen - Lichtleiter 29 und mehreren Linsen 31, 33. Sie ersetzen die Kombination aus Axikon und Lochblende wie soeben beschrieben und haben ebenfalls den Effekt der Verteilung und Fokussierung des Lichts 9 im gewünschten Maße. Als Teil der Sekundäroptik ist eine Fresnel-Linsenstruktur 17 gezeigt, die das Licht 9 telezentriert, bevor es auf ein Mikrolinsenarray trifft.

Figur 8 zeigt eine dritte Ausführungsform einer Primäroptik 1". Dabei wird das Licht 9 über eine Kombination aus zwei konkaven Freiformspiegeln 35, 37 geleitet, die so zur Lichtquelle 27 und zueinander ausgerichtet sind, dass sie das Licht 9 weiterleiten. Bei geeigneter Ausbildung der Freiformflächen der Freiformspiegeln 35, 37 lässt sich wiederum eine in einem bestimmten Winkelbereich räumlich homogene Verteilung und gleichzeitig telezentrische Kollimation des Lichts 9 erreichen. Eine Fresnel-Linse ist daher in dieser Ausführungsform nicht notwendig.

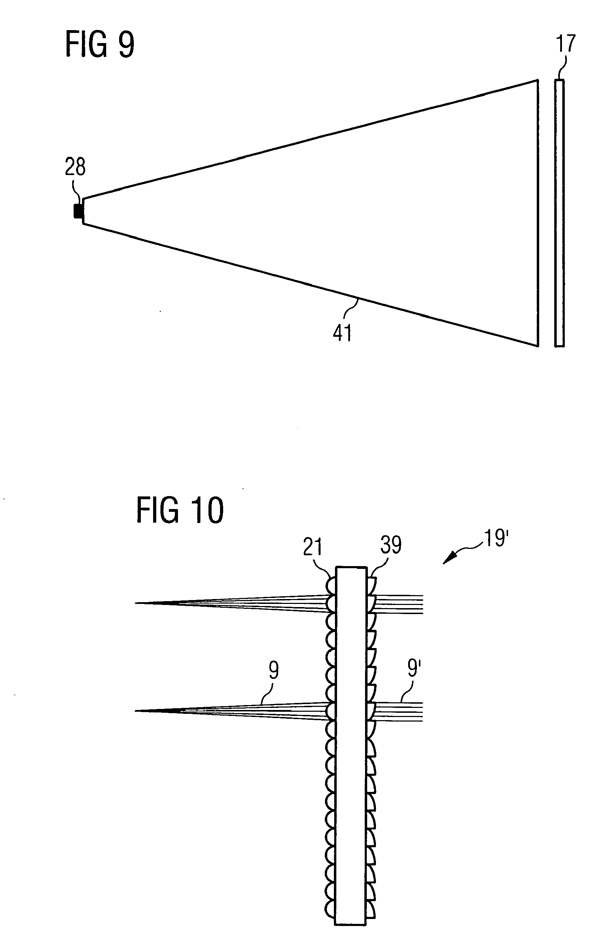

Figur 9 zeigt eine vierte Ausführungsform einer Primäroptik unter Verwendung einer anderen Form von Lichtquelle. Die Lichtquelle 28 umfasst hier mehrere LEDs, deren Emissionsspektrum auf das Absorptionsspektrum der einzelnen Gaps eines zu testenden photovoltaischen Systems so abgestimmt sind, dass jede Gap des Systems einen in etwa gleichen Energieeintrag in dem von ihr absorbierbaren Wellenlängenbereich erhält. Möglich ist hierbei eine Varianz der Energieeinträge der Gaps von maximal 20%, die noch als in etwa gleich gelten kann. Als Sekundäroptik fungiert in diesem Falle ein an seiner Spitze abgeschnittener innen hohler und an seinen Innenseiten verspiegelter Pyramidenstumpf 41, der auch als Kegelstumpf ausgeführt sein kann. Er kollimiert das Licht in Abhängigkeit vom Winkel an seiner abgeschnittenen Spitze so, dass die austretende Strahlung wiederum innerhalb eines vordefinierten bestimmten Winkelbereichs liegt. Mittels einer Fresnel-Linse kann diese Strahlung wiederum telezentrisch kollimiert werden.

Die Ausführung der Sekundäroptik 41 kann auch in Kombination mit anders gearteten Lichtquellen wie beispielsweise einer Xenon-Hochdrucklampe verwendet werden.

In Figur 10 ist eine alternative Form eines Mikrolinsenarrays 19' gezeigt. Auf seiner Eintrittsseite ist es analog zum dem Mikrolinsenarray 19 aus Figur 4 ausgebildet. Auf seiner Austrittsseite hingegen weist es statt einer runden, einfach konvexen Linsenstruktur eine Fresnel-Linsenstruktur 39 auf. Dadurch verteilt das Mikrolinsenarray 19' nicht nur das Licht 9 winkelmäßig gleich, sondern es erfolgt aufgrund des Fresnel-Linsenstruktur 39 auch eine telezentrische Kollimation. Eine eigene Vorrichtung zur telezentrischen Kollimation ist in diesem Falle obsolet.

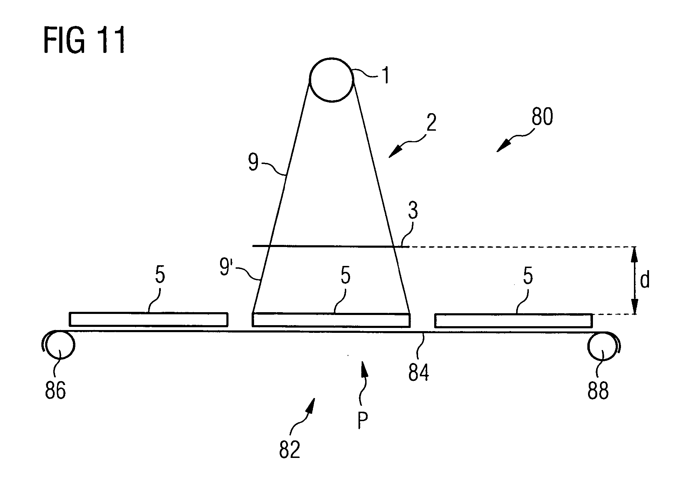

In Figur 11 ist schematisch ein Ausführungsbeispiel einer erfindungsgemäßen Testeinrichtung 80 gezeigt. Es umfasst ein Testbeleuchtungssystem 2, das hier in der Ausführungsform gemäß Figur 2 realisiert ist, sowie ein Positionierungssystem 82, mit Hilfe dessen photovoltaische Systeme 5, z.B. fertige Photovoltaik-Module 5, in einer vordefinierten Position P, insbesondere in einer vordefinierten Distanz d vom Testbeleuchtungssystem 2 positioniert werden können. Das Positionierungssystem 82 ist hier als Fördersystem ausgebildet und weist ein über zwei Führungsrollen 86, 88 geführtes Förderband 84 auf, auf dem die photovoltaischen Systeme 5 aufgelegt und bewegt werden können.

Befindet sich ein Photovoltaik-Modul 5 in einer gewünschten Position P zum Testbeleuchtungssystem 2, so strahlt das Testbeleuchtungssystem 2 in der vorher beschriebenen Weise kollimiertes Licht 9' mit homogener räumlicher Verteilung und homogener Winkelverteilung innerhalb des Test-Akzeptanzwinkelbereichs auf das Photovoltaik-Modul 5, dessen Leistungsausbeute dann gemessen wird. Unterschreitet die gemessene Leistung einen vorher definierten Mindest-Sollwert, so kann das Modul ausgesondert und ggf. neu justiert bzw. repariert werden, bevor es einen erneuten Testlauf durchläuft.

Es wird außerdem abschließend noch einmal darauf hingewiesen, dass es sich bei dem vorhergehend detailliert beschriebenen Verfahren sowie bei dem dargestellten Testbeleuchtungssystem lediglich um Ausführungsbeispiele handelt, welche vom Fachmann in verschiedenster Weise modifiziert werden können, ohne den Bereich der Erfindung zu verlassen. Insbesondere umfasst die Erfindung auch jede technisch realisierbare sinnvolle Kombination der einzelnen gezeigten möglichen Komponenten eines Testbeleuchtungssystems. Weiterhin schließt die Verwendung der unbestimmten Artikel "ein" bzw. "eine" nicht aus, dass die betreffenden Merkmale auch mehrfach vorhanden sein können.

## Patentansprüche

1. Testbeleuchtungssystem (2) zum Testen einer Qualität eines photovoltaischen Systems (5), umfassend
- eine künstliche Lichtquelle (27, 28),
- eine Primäroptik (1, 1', 1", 41)
- und eine Sekundäroptik (3) mit einem Mikrolinsenarray (19), die so ausgebildet und zueinander ausgerichtet sind,
dass die Primäroptik (1, 1', 1", 41) Licht (9) der Lichtquelle (27, 28) innerhalb eines vordefinierten Einstrahlwinkelbereichs kollimiert und damit eine Eintrittsseite des Mikrolinsenarrays (19) der Sekundäroptik (3) gleichmäßig beleuchtet, und dass das aus einer Austrittsseite des Mikrolinsenarrays (19) austretende Licht (9') auf einer Beleuchtungsfläche innerhalb eines definierten Test-Akzeptanzwinkelbereichs liegt und eine gleichmäßige Winkelverteilung aufweist.

2. Testbeleuchtungssystem gemäß Anspruch 1, wobei das Mikrolinsenarray (19) eine Anzahl von doppelseitigen Mikrolinsen aufweist.

3. Testbeleuchtungssystem gemäß Anspruch 1 oder 2, wobei die Primäroptik (1, 1', 1", 41) und/oder die Sekundäroptik (3) eine Fresnel-Linse (17, 39) umfasst.

4. Testbeleuchtungssystem gemäß Anspruch 3, wobei das Mikrolinsenarray (19) auf seiner Eintrittsseite oder seiner Austrittsseite eine Fresnel-Linsenstruktur (39) aufweist.

5. Testbeleuchtungssystem gemäß einem der vorhergehenden Ansprüche, wobei das Mikrolinsenarray (19) hexagonal angeordnete Einzel-Linsen (50) umfasst.

6. Testbeleuchtungssystem gemäß einem der vorhergehenden Ansprüche, wobei das Mikrolinsenarray (19) Einzel-Linsen (50) umfasst, deren Zwischenräume (52) lichtundurchlässig ausgeführt sind.

7. Testbeleuchtungssystem gemäß einem der vorhergehenden Ansprüche, umfassend ein Set von austauschbaren Mikrolinsenarrays (19), welche unterschiedliche Test-Akzeptanzwinkelbereiche aufweisen.

8. Testbeleuchtungssystem gemäß einem der vorhergehenden Ansprüche, wobei die künstliche Lichtquelle (27) eine Xenon-Hochdrucklampe umfasst.

9. Testbeleuchtungssystem gemäß einem der Ansprüche 1 bis 7, wobei die künstliche Lichtquelle (28) eine LED umfasst.

10. Testbeleuchtungssystem gemäß einem der vorhergehenden Ansprüche, wobei die Primäroptik (1, 1', 1") eine Blende (15) umfasst.

11. Testbeleuchtungssystem gemäß einem der vorhergehenden Ansprüche, wobei die Primäroptik (1, 1', 1") ein Axikon (13) umfasst.

12. Testbeleuchtungssystem gemäß einem der vorhergehenden Ansprüche, wobei die Primäroptik (1, 1', 1") einen länglichen, im Querschnitt bevorzugt mehreckigen Lichtleiter (29) umfasst.

13. Testbeleuchtungssystem gemäß einem der vorhergehenden Ansprüche, wobei die Primäroptik (1, 1', 1") eine Kombination von Freiformspiegeln (35, 37) umfasst.

14. Testbeleuchtungssystem gemäß einem der vorhergehenden Ansprüche, wobei die Primäroptik (41) einen innen hohlen und an seinen Innenseiten verspiegelten abgeschnittenen Kegel- oder Pyramidenstumpf umfasst.

15. Verfahren zum Testen einer Qualität eines photovoltaischen Systems (5), bei dem Licht (9) von einer künstlichen Lichtquelle (27, 28) über eine Primäroptik (1, 1', 1", 41)innerhalb eines vordefinierten Einstrahlwinkelbereichs kollimiert wird und damit eine Eintrittsseite eines Mikrolinsenarrays (19) einer Sekundäroptik (3) gleichmäßig beleuchtet wird, so dass das aus einer Austrittsseite des Mikrolinsenarrays (19) austretende Licht (9') auf einer Beleuchtungsfläche des photovoltaischen Systems (5) innerhalb eines definierten Test-Akzeptanzwinkelbereichs liegt und eine gleichmäßige Winkelverteilung aufweist.

16. Verfahren gemäß Anspruch 15, weiterhin umfassend eine Leistungsmessung des photovoltaischen Systems (5) und einen Abgleich der ermittelten Leistung mit einem Referenz-Leistungswert.

17. Testeinrichtung (80) umfassend ein Testbeleuchtungssystem (2) gemäß einem der Ansprüche 1 bis 14 sowie ein Positionierungssystem (82) zur relativen Positionierung eines photovoltaischen Systems (5) und/oder Testbeleuchtungssystems (2) in einer definierten Position (P) zueinander.
